# FASCICULE DE BREVET EUROPEEN

(11) **EP 3 589 926 B1**
(45) Date de publication et mention de la délivrance du brevet: **16.12.2020**
(21) Numéro de dépôt: 18712944.0
(22) Date de dépôt: 28.02.2018
(51) Int. Cl.: G01K 7/02, G01K 13/02

(54) **MESURE THERMOMÉTRIQUE PAR MAILLAGE DE SONDES, NOTAMMENT AU SEIN DE TURBOMACHINES**
THERMOMETRISCHE MESSUNG DURCH VERNETZUNG VON SONDEN, INSBESONDERE IN TURBINENMOTOREN
THERMOMETRIC MEASUREMENT BY MESHING OF PROBES, PARTICULARLY IN TURBINE ENGINES

(30) Priorité: 28.02.2017 FR 1751644
(43) Date de publication de la demande: 08.01.2020
(73) Titulaire: Safran Helicopter Engines, 64510 Bordes (FR)
(72) Inventeur: SAMSON, Rafaël, 77550 Moissy-Cramayel (FR); MOUTAUX, Antoine Pascal, 77550 Moissy-Cramayel (FR)
(74) Mandataire: Regimbeau
(86) Numéro de dépôt international: PCT/FR2018/050471
(87) Numéro de publication internationale: WO 2018/158541

(56) Documents cités:
- EP-A2- 0 878 851
- WO-A1-2016/055726
- FR-A- 1 138 404
- FR-A1- 3 023 415

## Description

### DOMAINE TECHNIQUE GÉNÉRAL ET ART ANTÉRIEUR

L'invention concerne la mesure de température, notamment au sein des turbopropulseurs.

Au sein des turbopropulseurs, la température des gaz dans les turbines peut s'élever au-delà du millier de degrés.

Les mesures de température y sont réalisées grâce à des sondes thermocouples qui offrent l'avantage de présenter de très larges plages de mesure continues.

Le fonctionnement d'une sonde thermocouple est basé sur l'exploitation de l'effet Seebeck : une différence de potentiel est générée par effet thermoélectrique entre deux points de jonction de conducteurs de natures différentes soumis à une différence de température.

Classiquement, une sonde thermocouple présente trois types de conducteurs :
- deux conducteurs de nature différente constituent ensemble le couple thermoélectrique ; ces deux conducteurs sont soudés en un point qui est destiné à être immergé dans le milieu dont on cherche à déterminer la température, cette soudure étant par convention appelée soudure chaude ;
- deux brins de conducteur de même nature constituent classiquement l'interface électrique ; un brin est soudé à un des conducteurs du couple thermoélectrique et un autre est soudé au deuxième conducteur du couple thermoélectrique, ces soudures étant par convention appelées soudures froides.

La différence de température entre la soudure chaude et les soudures froides génère une différence de potentiel, qui est mesurée entre les deux soudures froides du thermocouple.

Ce principe de mesure présente cependant l'inconvénient de délivrer de faibles niveaux de tension, ce qui génère des difficultés lors de l'acquisition du signal par le calculateur, notamment en raison de l'influence de champs électromagnétiques divers qui perturbe la mesure.

Il existe donc un besoin pour une solution de mesure de température permettant d'augmenter le niveau de signal en sortie de capteur, afin de favoriser l'acquisition, tout en simplifiant la réalisation des étages d'entrée du calculateur et en diminuant les coûts de production.

Il a déjà été proposé, dans l'état de la technique, de mettre en série deux ou plusieurs sondes thermocouples. L'association de thermocouples en série permet d'augmenter assez simplement les niveaux de tension permettant de réaliser l'acquisition. Cependant la perte d'un thermocouple engendre la perte d'une branche complète de mesure. Cette solution améliore la détection de panne mais peut faire diminuer le taux de disponibilité de la machine.

L'utilisation de couples thermoélectriques présentant un coefficient Seebeck supérieur peut également permettre d'augmenter les niveaux de tension en sortie de sonde. Le couple actuellement utilisé est un type appelé K, ou chromel-alumel. Les couples envisagés sont le type E, ou chromel (alliage nickel + chrome)-constantan (alliage nickel + cuivre), le type J, ou fer-constantan, et le type N, ou Nisil (alliage Nickel + Silice)-Nicrosil (alliage Nickel + Chrome + Silice). Certaines contraintes se présentent cependant, en effet un couple thermoélectrique donné peut présenter une plage de fonctionnement plus réduite, les types E et J présentant une plage continue de 800°C et 720°C respectivement face aux 1100°C du type K. De plus le type J ne convient pas à une utilisation dans un milieu oxydant et humide.

Il est également possible d'amplifier les niveaux de tension au plus près de la sonde, évitant ainsi de faire parcourir des signaux de faibles niveaux sur de longues distances, cette solution ayant été envisagée mais complexifiant la mesure.

WO 2016/055726 décrit un capteur pour mesurer la température des gaz à la sortie d'une turbine à gaz telle qu'une turbine d'hélicoptère.

FR 1 138 404 décrit un montage électrique destiné à donner la valeur moyenne de plusieurs mesures simultanées.

EP 0 878 851 décrit un appareil de génération d'énergie thermoélectrique.

FR 3 023 415 décrit un générateur thermoélectrique pour l'alimentation d'un dispositif électrique ou électronique.

### PRÉSENTATION GÉNÉRALE DE L'INVENTION

Un but de l'invention est d'augmenter le niveau de tension en sortie du dispositif de mesure thermométrique.

Un autre but est d'augmenter la robustesse de fonctionnement du système de mesure thermométrique.

Un autre but est d'augmenter la disponibilité du système de mesure thermométrique.

Un autre but est d'améliorer la détection de panne dans le système de mesure thermométrique.

Selon un aspect, l'invention propose un dispositif de mesure de température comportant au moins trois sondes de température, un calculateur, le calculateur étant configuré pour estimer une température à partir de mesures de tension en sortie des sondes, caractérisé en ce que les sondes sont reliées entre elles selon plusieurs mailles montées en série, au moins une maille comportant au moins deux sondes montées en parallèle et au moins une autre maille comportant une sonde ou plusieurs sondes montées en parallèle.

Un tel dispositif est avantageusement complété par les différentes caractéristiques suivantes prises seules ou en combinaison :
- au moins une sonde de température est un thermocouple ;
- au moins une sonde comporte plusieurs thermocouples ;
- deux mailles en série comportent chacune au moins un thermocouple, deux thermocouples desdites mailles étant montés en série et la soudure froide entre un conducteur de liaison et un conducteur d'un premier type du couple thermoélectrique d'un premier thermocouple est reliée de manière équipotentielle à la soudure froide entre un conducteur de liaison et un conducteur d'un second type du couple thermoélectrique de l'autre thermocouple, de manière à additionner les forces électromotrices des deux thermocouples ;

- le dispositif comporte au moins deux thermocouples montés en parallèle et les soudures froides sur les conducteurs de même type des couples thermoélectriques des deux thermocouples sont reliées de manière équipotentielle, les deux thermocouples présentant ainsi la même différence de potentiel ;
- les soudures froides des thermocouples des différentes mailles sont contenues dans un boîtier de liaison isotherme ;
- le dispositif comporte plusieurs sondes comportant chacune au moins deux thermocouples, des thermocouples des différentes sondes étant reliés entre eux pour définir deux voies de mesure, chaque voie de mesure comportant une pluralité de mailles montées en série, dont
   ▪ au moins une maille comporte au moins deux sondes montées en parallèle et
   ▪ au moins une autre maille comporte une sonde ou plusieurs sondes montées en parallèle,
   le câblage des voies étant configuré de sorte qu'au moins une sonde comprenne un thermocouple monté dans une première maille sur une voie et un deuxième thermocouple monté dans une deuxième maille sur l'autre voie.

Selon un autre aspect, l'invention propose une machine industrielle comportant un tel dispositif de mesure de température.

Selon un autre aspect, l'invention propose une turbomachine comportant un tel dispositif de mesure de température.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique de l'implantation des sondes dans le dispositif de mesure thermométrique et le montage électrique associé pour une configuration comportant 4 sondes ;
- la figure 2 représente l'implantation des sondes sur un plan de la section inter-turbines selon des configurations comportant différents nombres de sondes ;
- la figure 3 représente le montage électrique des deux voies de mesures dans une configuration comportant 4 sondes à deux thermocouples chacune ;
- la figure 4 représente le montage électrique des deux voies de mesures dans une configuration comportant 4 sondes à deux thermocouples chacune, dans un cas de fonctionnement où la sonde 1 est endommagée ;
- la figure 5 représente le montage électrique des deux voies de mesures dans une configuration comportant 4 sondes à deux thermocouples chacune, dans un cas de fonctionnement où les sondes 1 et 2 sont endommagées ;
- la figure 6 représente une configuration du montage électrique des deux voies de mesures dans une configuration comportant 5 sondes à deux thermocouples chacune ;
- la figure 7 représente une seconde configuration du montage électrique des deux voies de mesures dans une configuration comportant 5 sondes à deux thermocouples chacune ;
- la figure 8 représente une configuration du montage électrique des deux voies de mesures dans une configuration comportant 6 sondes à deux thermocouples chacune ;
- la figure 9 représente une seconde configuration du montage électrique des deux voies de mesures dans une configuration comportant 6 sondes à deux thermocouples chacune ;
- la figure 10 représente une troisième configuration du montage électrique des deux voies de mesures dans une configuration comportant 6 sondes à deux thermocouples chacune ;
- la figure 11 est une représentation schématique de l'implantation des sondes dans le dispositif de mesure thermométrique et le montage électrique associé pour une configuration comportant 6 sondes ;
- la figure 12 est une représentation schématique de l'implantation des sondes à double thermocouples dans le dispositif de mesure thermométrique et les montages des deux voies de mesure associées pour une configuration comportant 3 sondes.

### DESCRIPTION D'UN OU PLUSIEURS MODES DE MISE EN ŒUVRE ET DE RÉALISATION

Le dispositif de mesure de température consiste en un montage de sondes à thermocouples 1, 2, 3 et 4 dans un circuit électrique 5 relié au niveau de ses bornes 6 à un calculateur 7 convertissant la tension U relevée en une différence de température entre les soudures froides des thermocouples et leur soudure chaude, le montage associant en série des mailles 57, 58, chacune des mailles comportant des thermocouples 10, 20 et 30, 40 montés en parallèle.

Il est entendu que les exemples évoqués ci-après sont purement illustratifs et non limitatifs, le dispositif décrit pouvant comporter un nombre de mailles, de sondes ou de thermocouples différent des exemples décrits.

### Exemple d'installation du dispositif de mesure de température

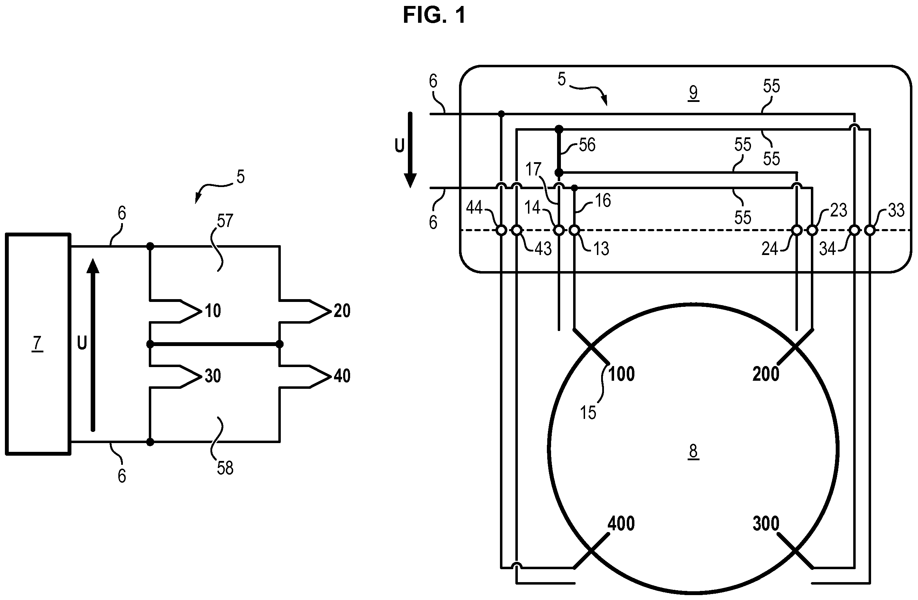

En référence à la figure 1, un schéma d'installation correspondant à un montage comportant 4 sondes thermocouple 100, 200, 300, 400 est représenté.

Les sondes sont implantées dans une section inter-turbine 8 et raccordées à un boîtier de jonction 9.

Les sondes sont intégrées dans la section inter-turbine 8 sur sa périphérie, au niveau de sa paroi sur un même plan orthogonal à la direction de circulation des gaz.

Un thermocouple 10 comporte une jonction d'un premier type 13, c'est-à-dire une soudure entre un premier conducteur du couple thermoélectrique et un brin du conducteur d'interface électrique 16, une jonction d'un second type 14 entre le second conducteur du couple thermoélectrique et un autre brin de conducteur de liaison électrique 17, et une soudure chaude 15 au point de contact des conducteurs du couple thermoélectrique.

Les jonctions de premier et deuxième type, c'est à dire les soudures froides des thermocouples, sont toutes situées dans le boîtier de jonction 9 et doivent être maintenues à la même température pour éviter de générer une force électromotrice parasite.

Le boîtier de jonction 9 est donc un boîtier isotherme contrôlé thermiquement, semblable à un boîtier décrit dans la demande de brevet FR3027106.

La résistance interne du circuit augmentant avec la longueur du câble, il est nécessaire que les brins mis en parallèle respectent les mêmes longueurs pour éviter de biaiser les forces électromotrices moyennées locales. Les brins de certains thermocouples pourront donc être repliés pour présenter la même longueur de câble pour chaque thermocouple en entrée du boîtier de jonction 9 et du calculateur 7.

L'association en série et parallèle des thermocouples 10, 20, 30, 40 est réalisée par des liaisons en cuivre 55 dans le boîtier de jonction 9. Ceci permet de réduire les coûts de production du harnais thermocouple en réalisant les jonctions dans un boitier déporté ou en aval de l'embase du harnais.

Le montage réalisé dans le boîtier de jonction 9 comporte un assemblage des jonctions de premier type 13 et 23 des thermocouples 10 et 20 entre elles et les jonctions de deuxième type 34 et 44 des sondes 30 et 40 entre elles, ces deux pôles étant ensuite liés à la sortie du boîtier de jonction 9.

La liaison équipotentielle 56 des jonctions de deuxième type 14 et 24 des thermocouples 10 et 20 et des jonctions de premier type 33 et 43 des thermocouples 30 et 40 est ensuite réalisée, formant ainsi une mise en série de deux mailles 57 et 58, la maille 57 comportant les thermocouples 10 et 20 associés en parallèle et la maille 58 comportant les thermocouples 30 et 40 associés en parallèle.

Le calculateur 7 est relié aux bornes du boîtier de jonction 9, et convertit la tension mesurée U en différence de température entre la section inter-turbine 8 et le boîtier de jonction 9, la température du boîtier de jonction 9 étant contrôlée par une sonde de température.

Le calculateur 7 établit ensuite la température des gaz intra-turbine en ajoutant la différence de température entre la soudure chaude et les soudures froides à la température des soudures froides.

Dans une des formes du dispositif de mesure de température, les sondes (par exemple la sonde 1) comportent deux thermocouples (10, 11 pour la sonde 1) par chemise (12 pour la sonde 1), permettant donc de réaliser deux voies de mesure de température.

### Intégration des sondes dans la turbine

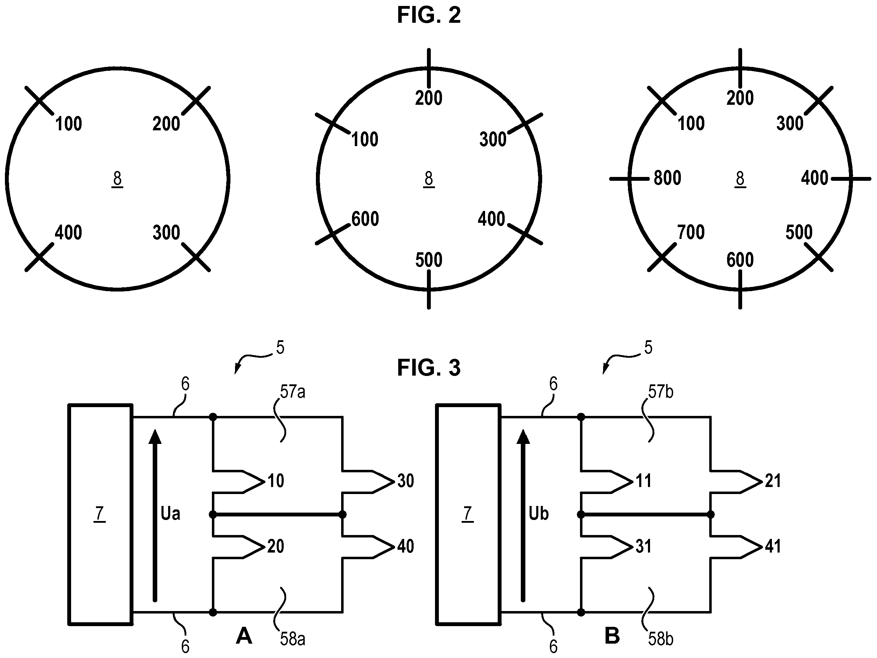

En référence à la figure 2, différentes solutions d'agencement des sondes thermocouples sur un plan de turbopropulseur conviennent pour réaliser le dispositif de mesure de température.

Une première solution comporte 4 sondes thermocouples 100, 200, 300, 400 disposées circulairement à 90° les unes des autres.

Une deuxième solution comporte 6 sondes thermocouples 100, 200, 300, 400, 500, 600 disposées circulairement à 60° les unes des autres.

Une autre solution comporte 8 sondes thermocouples 100, 200, 300, 400, 500, 600, 700, 800 disposées circulairement à 45° les unes des autres.

### Montage à 4 sondes thermocouples doubles

Un mode de réalisation du dispositif de mesure de température consiste à monter 4 sondes thermocouples doubles pour former deux voies de mesure.

Chaque voie de mesure comporte donc un montage comportant un thermocouple de chaque sonde double, les thermocouples d'une voie étant montés électriquement selon un circuit comportant une mise en série de deux mailles composées de deux thermocouples montés en parallèle.

En référence à la figure 3, dans le cadre d'une solution retenue comportant 4 sondes thermocouples 100, 200, 300 et 400, un mode de réalisation du dispositif de mesure de température comporte deux câblages différents pour les deux voies de mesure A et B. La voie A comporte par exemple une association en série de deux mailles 57a et 58a, une première maille 57a composée des thermocouples 10 et 30 montés en parallèle et une seconde maille 58a composée des thermocouples 20 et 40 montés en parallèle. La voie B comporte elle une association en série de deux mailles 57b et 58b, une première maille 57b composée des thermocouples 11 et 21 montés en parallèle et une seconde maille 58b composée des thermocouples 31 et 41 montés en parallèle.

Chaque voie de mesure est reliée indépendamment de l'autre au calculateur, qui mesure donc leurs tensions Ua (voie A) et Ub (voie B), qui sont homogènes en cas de fonctionnement normal car les thermocouples composant les voies de mesure A et B sont disposés aux mêmes azimuts.

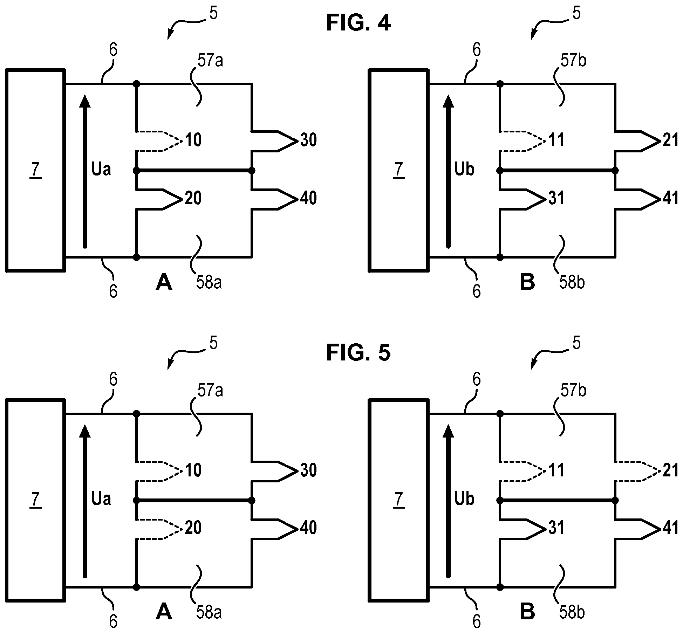

En référence à la figure 4, ce mode de réalisation permet, en cas de dégradation d'une sonde, de ne pas perdre d'information ou de précision sur les deux voies de mesure simultanément. En cas de perte de la sonde 100 par exemple, les thermocouples 10 et 11 sont considérés comme une ouverture dans le circuit sur les voies A et B, ce qui n'engendre pas de perte significative de précision. La tension U fournie au calculateur 7 reste dans le même ordre de grandeur, soit la somme des forces électromotrices de deux thermocouples.

En référence à la figure 5, en cas de détérioration d'une deuxième sonde, une des voies reste opérationnelle. Dans cet exemple, la sonde 200 est également endommagée. Les thermocouples 20 et 21 sont considérés comme des ouvertures dans leur voie de mesures respective. L'information est perdue sur la voie B, mais reste disponible et du même ordre de grandeur sur la voie A, soit la somme des forces électromotrices des thermocouples 30 et 40.

Ce type de réalisation permet, en plus d'augmenter la tension U de mesure aux bornes du montage, de conserver la disponibilité des mesures sur au moins une des voies en cas de panne simple ou double et de détecter une anomalie en cas de perte d'une des voies.

### Montage à 5 sondes thermocouples doubles

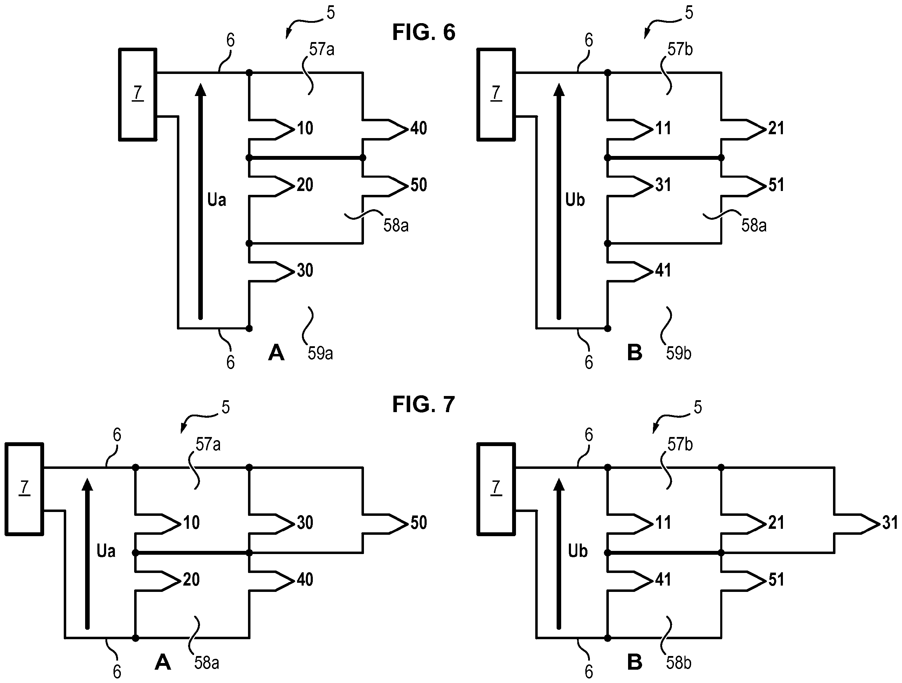

En référence aux figures 6 et 7, le montage de 5 sondes thermocouples doubles peut être réalisé de deux manières différentes.

Un mode de réalisation du dispositif de mesure de température, représenté sur la figure 6, privilégie l'augmentation de la tension U de mesure. Sur la voie A, les sondes sont câblées de manière à réaliser un montage composé de la mise en série de trois mailles, une première maille 57a composée des thermocouples 10 et 40 montées en parallèle, une seconde maille 58a composée des thermocouples 20 et 50 montées en parallèle et une troisième maille 59a comportant le thermocouple 30. Sur la voie B, les sondes sont câblées de manière à réaliser un montage composé de la mise en série de trois mailles, une première maille 57b composée des thermocouples 11 et 21 montées en parallèle, une seconde maille 58b composée des thermocouples 31 et 51 montées en parallèle et une troisième maille 59b comportant le thermocouple 41.

Ce mode de réalisation permet, en plus d'augmenter la tension U de mesure, de conserver la mesure sur au moins une des voies en cas de panne simple ou double, en plus de permettre la détection d'une anomalie par la perte d'une des voies si la sonde 300 ou 400 est endommagée.

Un autre mode de réalisation du dispositif de mesure de température, représenté sur la figure 7, privilégie la disponibilité du système de mesure. Sur la voie A, les sondes sont câblées de manière à réaliser un montage composé de la mise en série de deux mailles, une première maille 57a composée des sondes 10 et 30 et 50 montées en parallèle, une seconde maille 58a composée des sondes 20 et 40 montées en parallèle. Sur la voie B, les sondes sont câblées de manière à réaliser un montage composé de la mise en série de deux mailles, une première maille 57b composée des sondes 11 et 21 et 31 montées en parallèle, une seconde maille 58b composée des sondes 41 et 51 montées en parallèle.

Ce mode de réalisation permet de garantir le fonctionnement d'au moins une des voies de mesure même en cas de panne triple. La détérioration des sondes 200 et 400 rend la voie A inopérante et révèle un défaut tout comme la détérioration des sondes 400 et 500 rend la voie B inopérante et permet donc de détecter un défaut.

### Montage à 6 sondes thermocouples doubles

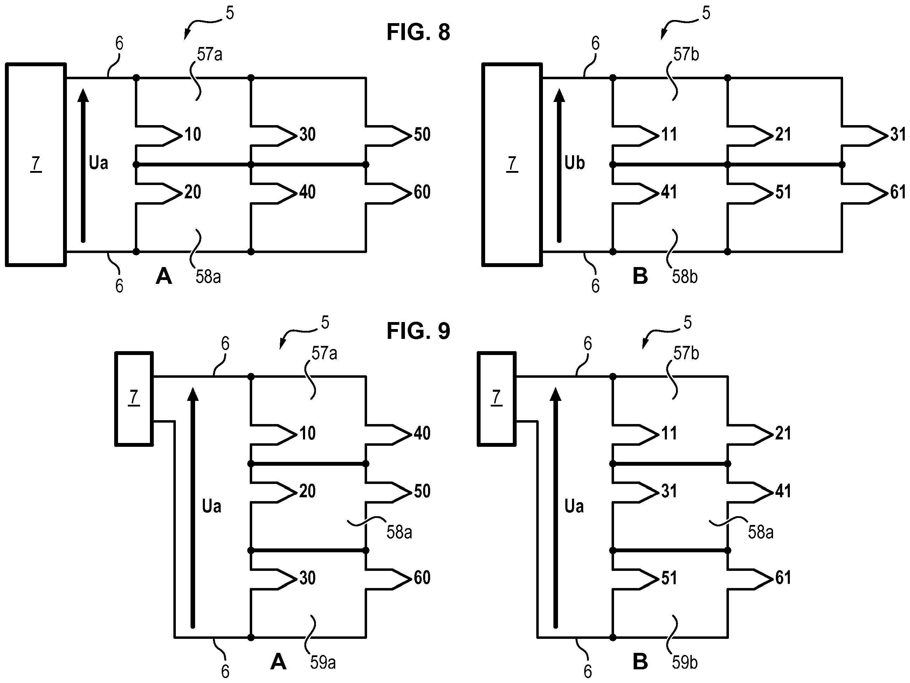

En référence à la figure 8, un mode de réalisation du dispositif de mesure de température comporte 6 sondes thermocouples doubles, dont le montage privilégie la disponibilité au détriment de la détection de panne et l'augmentation de la tension de mesure.

La voie A comporte une mise en série de deux mailles, une première maille 57a composée des thermocouples 10, 30 et 50 montées en parallèle et une seconde maille 58a composée des thermocouples 20, 40 et 60 montées en parallèle. La voie B comporte une mise en série de deux mailles, une première maille 57b composée des thermocouples 11, 21 et 31 montées en parallèle et une seconde maille 58b composée des thermocouples 41, 51 et 61 montées en parallèle.

En référence à la figure 9, un mode de réalisation du dispositif de mesure de température comporte 6 sondes thermocouples doubles, dont le montage privilégie l'augmentation de la tension U de mesure et la détection de panne, une panne double pouvant causer la perte d'une des voies.

La voie A comporte une mise en série de trois mailles, une première maille 57a composée des thermocouples 10 et 40 montées en parallèle, une deuxième maille 58a composée des thermocouples 20 et 50 montées en parallèle et une troisième maille 59a composée des thermocouples 30 et 60 montées en parallèle. La voie B comporte une mise en série de trois mailles, une première maille 57b composée des thermocouples 11 et 21 montées en parallèle, une deuxième maille 58b composée des thermocouples 31 et 41 montées en parallèle et une troisième maille 59b composée des thermocouples 51 et 61 montées en parallèle.

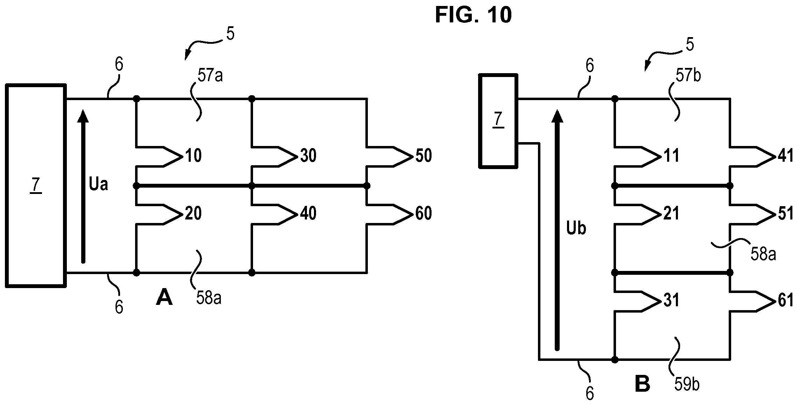

En référence à la figure 10, un mode de réalisation du dispositif de mesure de température comporte sur sa voie A un montage privilégiant la disponibilité et sur sa voie B un montage privilégiant la détection de panne et la tension U de mesure. La voie A comporte donc une mise en série de deux mailles, une première maille 57a composée des thermocouples 10, 30 et 50 montées en parallèle et une seconde maille 57b composée des thermocouples 20, 40 et 60 montées en parallèle. La voie B comporte une mise en série de trois mailles, une première maille 57b composée des thermocouples 11 et 41 montées en parallèle, une deuxième maille 58b composée des thermocouples 21 et 51 montées en parallèle et une troisième maille 59b composée des thermocouples 31 et 61 montées en parallèle.

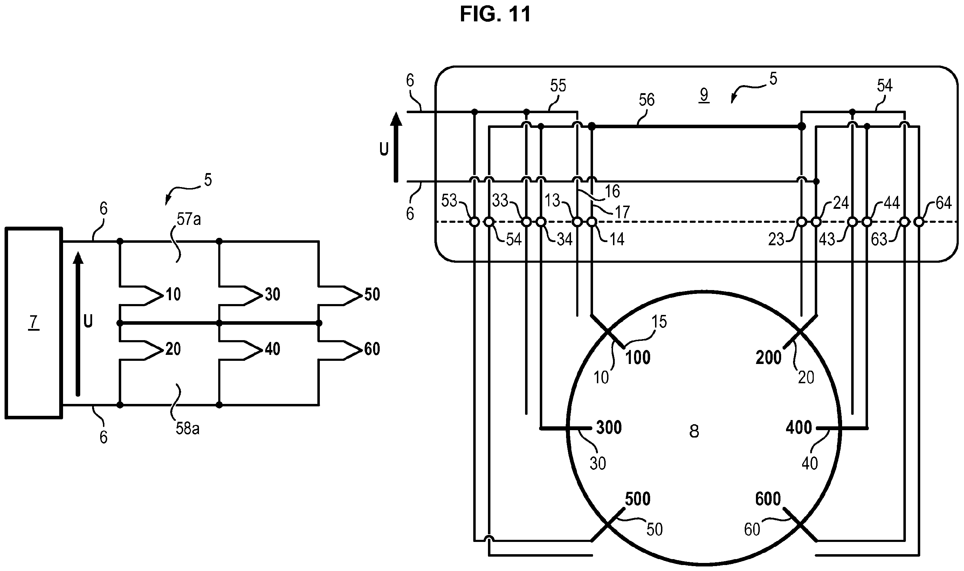

En référence à la figure 11, un schéma d'installation correspondant à un montage comportant 6 sondes thermocouples 100, 200, 300, 400, 500, 600 est représenté.

Les sondes sont implantées dans une section inter-turbine 8 et raccordées à un boîtier de jonction 9.

Les sondes sont intégrées dans la section inter-turbine 8 sur sa périphérie, au niveau de sa paroi sur un même plan orthogonal à la direction de circulation des gaz.

Un thermocouple 10 comporte une jonction d'un premier type 13, c'est-à-dire une soudure entre le conducteur d'un premier type du couple thermoélectrique et un brin du conducteur d'interface électrique 16, une jonction de deuxième type 14 entre le conducteur de deuxième type du couple thermoélectrique et un autre brin de conducteur de liaison électrique 17, et une soudure chaude 15 au point de contact des conducteurs du couple thermoélectrique.

Les jonctions de premier et deuxième type, les soudures froides des thermocouples, sont toutes situées dans le boîtier de jonction 9.

L'association en série et parallèle des thermocouples 10, 20, 30, 40, 50 et 60 est réalisée par des liaisons en cuivre 55 dans le boîtier de jonction 9.

Le montage réalisé dans le boîtier de jonction 9 comporte un assemblage des jonctions de premier type 13, 33 et 53 des thermocouples 10, 30 et 50 entre elles et les jonctions de deuxième type 24, 44 et 64 des sondes 20, 40 et 60 entre elles, ces deux pôles étant ensuite liés à la sortie du boîtier de jonction 9.

La liaison équipotentielle 56 des jonctions de deuxième type 14, 34 et 54 des thermocouples 10, 30 et 50 et des jonctions de premier type 23, 43 et 63 des thermocouples 20, 40 et 60 est ensuite réalisée, formant ainsi une mise en série de deux mailles 57 et 58, la maille 57 comportant les thermocouples 10, 30 et 50 associés en parallèle et la maille 58 comportant les thermocouples 20, 40 et 60 associés en parallèle.

Le calculateur 7 est relié aux bornes du boîtier de jonction 9, et convertit la tension mesurée U en différence de température entre la section inter-turbine 8 et le boîtier de jonction 9, la température du boîtier de jonction 9 étant contrôlée par une sonde de température.

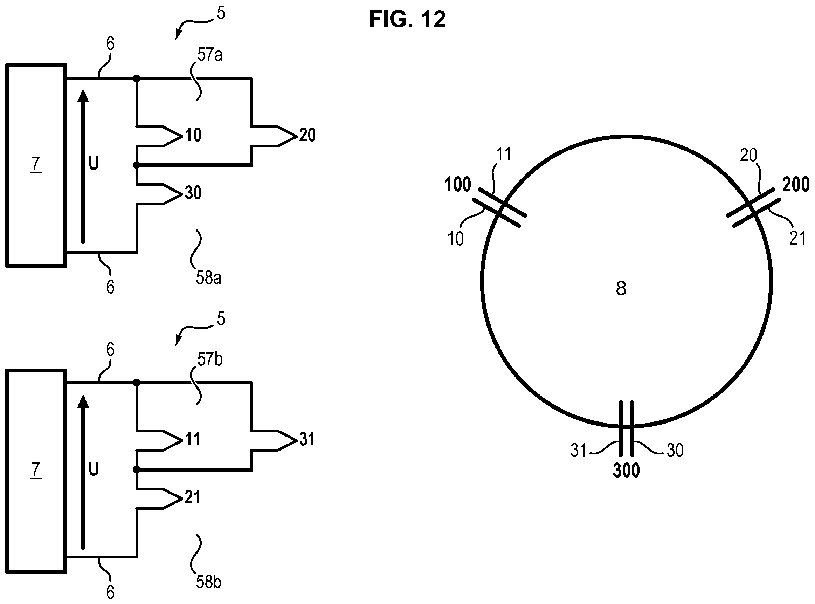

En référence à la figure 12, une configuration minimale du système comporte trois sondes à double thermocouples.

Les deux voies de mesures A et B comportent chacune deux mailles 57 et 58 montées en série pour respecter le critère d'augmentation du niveau de tension de sortie.

La maille 57 comporte deux thermocouples montés en parallèle pour respecter le critère de disponibilité du système et la maille 58 comporte un thermocouple, respectant le critère de détection de panne.

Sur la voie A, la maille 57a comporte les thermocouples 10 et 20 des sondes 1 et 2, la maille 58a comportant le thermocouple 30 de la sonde 3.

Sur la voie B, la maille 57b comporte les thermocouples 11 et 31 des sondes 1 et 3, la maille 58b comportant le thermocouple 21 de la sonde 2.

Cette association des sondes dans des mailles différentes selon la voie de mesure permet de respecter le critère de robustesse du système, la perte d'une sonde entraînant la perte d'une seule voie de mesure, la seconde voie de mesure demeurant fonctionnelle.

Dans des modes de réalisation non détaillés intégrant des sondes comportant un nombre différent de thermocouples, il serait possible de réaliser un nombre différent de voies de mesures.

## Revendications

1. Dispositif de mesure de température comportant au moins trois sondes (100,200,300) de température, un calculateur (7), le calculateur (7) étant configuré pour estimer une température à partir de mesures de tension (U) en sortie des sondes, **caractérisé en ce que** les sondes sont reliées entre elles selon plusieurs mailles (57,58) montées en série, au moins une maille (57) comportant au moins deux sondes (100,200) montées en parallèle et au moins une autre maille (58) comportant une autre sonde (300) ou plusieurs autres sondes montées en parallèle.

2. Dispositif de mesure de température tel que défini par la revendication 1, **caractérisé en ce qu'**au moins une sonde (100) de température est un thermocouple (10).

3. Dispositif de mesure de température selon l'une des revendications 1 ou 2, **caractérisé en ce qu'**au moins une sonde (100, 200, 300) comporte plusieurs thermocouples (10, 11, 20, 21, 30, 31).

4. Dispositif de mesure de température selon une des revendications 2 ou 3, **caractérisé en ce que** deux mailles en série (57, 58) comportent chacune au moins un thermocouple, deux thermocouples (10, 30) desdites mailles étant montés en série et **en ce que** une soudure froide (14) entre un conducteur de liaison (17) et un conducteur d'un premier type du couple thermoélectrique d'un premier thermocouple (10) est reliée de manière équipotentielle à une autre soudure froide (33) entre un conducteur de liaison (36) et un conducteur d'un second type du couple thermoélectrique de l'autre thermocouple (30), de manière à additionner les forces électromotrices des deux thermocouples.

5. Dispositif de mesure de température selon l'une des revendications 2 à 4, **caractérisé en ce qu'**il comporte au moins deux thermocouples (10, 20) montés en parallèle et **en ce que** les soudures froides (13) sur les conducteurs de même type des couples thermoélectriques des deux thermocouples sont reliées de manière équipotentielle, les deux thermocouples (10, 20) présentant ainsi la même différence de potentiel.

6. Dispositif de mesure de température selon l'une des revendications 4 ou 5, **caractérisé en ce que** les soudures froides (16, 17, 26, 27, 36, 37) des thermocouples (10, 20, 30) des différentes mailles sont contenues dans un boîtier de liaison (9) isotherme.

7. Dispositif de mesure de température selon l'une des revendications 3 à 6, **caractérisé en ce qu'**il comporte plusieurs sondes (100,200,300) comportant chacune au moins deux thermocouples (10,11,20,21,30,31), des thermocouples des différentes sondes étant reliés entre eux pour définir deux voies de mesure (A,B), chaque voie (A,B) de mesure comportant une pluralité de mailles (57b, 58b) montées en série, dont
i. au moins une maille (57b) comporte au moins deux sondes (11, 31) montées en parallèle et
ii. au moins une autre maille (58b) comporte une sonde (21) ou plusieurs sondes montées en parallèle,
le câblage des voies étant configuré de sorte qu'au moins une sonde (100, 200, 300) comprenne un thermocouple (10, 20, 30) monté dans une première maille (57a) sur une voie (A) et un deuxième thermocouple (11, 21, 31) monté dans une deuxième maille (58b) sur l'autre voie (B).

8. Machine industrielle comportant au moins un dispositif de mesure de température tel que défini dans l'une des revendications précédentes.

9. Turbomachine, notamment turbopropulseur, comportant au moins un dispositif de mesure de température tel que défini dans l'une des revendications 1 à 7.

## Patentansprüche

1. Temperaturmessvorrichtung, aufweisend mindestens drei Temperatursonden (100, 200, 300), einen Rechner (7), wobei der Rechner (7) ausgelegt ist, um eine Temperatur auf der Basis von Spannungsmessungen (U) am Ausgang der Sonden zu ermitteln, **dadurch gekennzeichnet, dass** die Sonden gemäß mehreren, in Reihe montierten Netzen (57, 58) miteinander verbunden sind, wobei mindestens ein Netz (57) mindestens zwei parallel montierte Sonden (100, 200) aufweist und mindestens ein anderes Netz (58) eine andere Sonde (300) oder mehrere andere, parallel montierte Sonden aufweist.

2. Temperaturmessvorrichtung nach Anspruch 1, **dadurch gekennzeichnet, dass** mindestens eine Temperatursonde (100) ein Thermoelement (10) ist.

3. Temperaturmessvorrichtung nach einem der Ansprüche 1 oder 2, **dadurch gekennzeichnet, dass** mindestens eine Sonde (100, 200, 300) mehrere Thermoelemente (10, 11, 20, 21, 30, 31) aufweist.

4. Temperaturmessvorrichtung nach einem der Ansprüche 2 oder 3, **dadurch gekennzeichnet, dass** zwei Netze in Reihe (57, 58) jeweils mindestens ein Thermoelement aufweisen, wobei zwei Thermoelemente (10, 30) der Netze in Reihe montiert sind und dass eine kalte Schweißung (14) zwischen einem Verbindungsleiter (17) und einem Leiter eines ersten Typs des thermoelektrischen Elements eines ersten Thermoelements (10) mit einer anderen kalten Schweißung (33) zwischen einem Verbindungsleiter (36) und einem Leiter eines zweiten Typs des thermoelektrischen Elements des anderen Thermoelements (30) derart äquipotential verbunden ist, dass sich die elektromotorischen Kräfte der zwei Thermoelemente addieren.

5. Temperaturmessvorrichtung nach einem der Ansprüche 2 bis 4, **dadurch gekennzeichnet, dass** sie mindestens zwei Thermoelemente (10, 20) aufweist, die parallel montiert sind und dass die kalten Schweißungen (13) auf den Leitern desselben Typs der thermoelektrischen Elemente der zwei Thermoelemente äquipotential verbunden sind, wobei die zwei Thermoelemente (10, 20) somit dieselbe Potentialdifferenz aufweisen.

6. Temperaturmessvorrichtung nach einem der Ansprüche 4 oder 5, **dadurch gekennzeichnet, dass** die kalten Schweißungen (16, 17, 26, 27, 36, 37) der Thermoelemente (10, 20, 30) der verschiedenen Netze in einem isothermen Verbindungsgehäuse (9) enthalten sind.

7. Temperaturmessvorrichtung nach einem der Ansprüche 3 bis 6, **dadurch gekennzeichnet, dass** sie mehrere Sonden (100, 200, 300) aufweist, die jeweils mindestens zwei Thermoelemente (10, 11, 20, 21, 30, 31) aufweisen, wobei Thermoelemente der verschiedenen Sonden miteinander verbunden sind, um zwei Messwege (A, B) zu definieren, wobei jeder Messweg (A, B) eine Vielzahl von Netzen (57b, 58b) aufweist, die in Reihe montiert sind, von denen
i. mindestens ein Netz (57b) mindestens zwei parallel montierte Sonden (11, 31) aufweist, und
ii. mindestens ein anderes Netz (58b) eine Sonde (21) oder mehrere parallel montierte Sonden aufweist,
wobei die Verkabelung der Wege derart ausgelegt ist, dass mindestens eine Sonde (100, 200, 300) ein Thermoelement (10, 20, 30) umfasst, das in einem ersten Netz (57a) auf einem Weg (A) montiert ist, und ein zweites Thermoelement (11, 21, 31), das in einem zweiten Netz (58b) auf dem anderen Weg (B) montiert ist.

8. Industriemaschine, aufweisend mindestens eine Temperaturmessvorrichtung nach einem der vorangehenden Ansprüche.

9. Turbomaschine, insbesondere Turbopropmaschine, aufweisend mindestens eine Temperaturmessvorrichtung nach einem der Ansprüche 1 bis 7.

## Claims

1. A temperature measuring device including at least three temperature probes (100, 200, 300), a calculator (7), the calculator (7) being configured to estimate a temperature from voltage measurements (U) outputted from the probes, **characterized in that** the probes are connected together according to several meshes (57, 58) mounted in series, at least one mesh (57) including at least two probes (100, 200) mounted in parallel and at least another mesh (58) including another probe (300) or several other probes mounted in parallel.

2. The temperature measuring device as defined by claim 1, **characterized in that** at least one temperature probe (100) is a thermocouple (10).

3. The temperature measuring device according to any of claims 1 or 2, **characterized in that** at least one probe (100, 200, 300) includes several thermocouples (10, 11, 20, 21, 30, 31).

4. The temperature measuring device according to any of claims 2 or 3, **characterized in that** two meshes in series (57, 58) each include at least one thermocouple, two thermocouples (10, 30) of said meshes being mounted in series and **in that** a cold weld (14) between a connecting conductor (17) and a conductor of a first type of the thermoelectric couple of a first thermocouple (10) is equipotentially connected to another cold weld (33) between a connecting conductor (36) and a conductor of a second type of the thermoelectric couple of the other thermocouple (30), so as to add the electromotive forces of the two thermocouples.

5. The temperature measuring device according to any of claims 2 to 4, **characterized in that** it includes at least two thermocouples (10, 20) mounted in parallel and **in that** the cold welds (13) on the conductors of the same type of the thermoelectric couples of the two thermocouples are equipotentially connected, the two thermocouples (10, 20) thus having the same potential difference.

6. The temperature measuring device according to any of claims 4 or 5, **characterized in that** the cold welds (16, 17, 26, 27, 36, 37) of the thermocouples (10, 20, 30) of the different meshes are contained in an insulated connection box (9).

7. The temperature measuring device according to any of claims 3 to 6, **characterized in that** it includes several probes (100, 200, 300) each including at least two thermocouples (10, 11, 20, 21, 30, 31), thermocouples of the different probes being connected together to define two measurement channels (A, B), each measurement channel (A, B) including a plurality of meshes (57b, 58b) mounted in series, whose
i. at least one mesh (57b) includes at least two probes (11, 31) mounted in parallel, and
ii. at least another mesh (58b) includes a probe (21) or several probes mounted in parallel,
the channel wiring being configured so that at least one probe (100, 200, 300) comprise a thermocouple (10, 20, 30) mounted in a first mesh (57a) on a channel (A) and a second thermocouple (11, 21, 31) mounted in a second mesh (58b) on the other channel (B).

8. An industrial machine including at least one temperature measuring device as defined in any of the preceding claims.

9. A turbomachine, in particular turboprop, including at least one temperature measuring device as defined in any of claims 1 to 7.
